# EUROPEAN PATENT SPECIFICATION

(11) **EP 1 190 014 B1**
(45) Date of publication and mention of the grant of the patent: **02.07.2003**
(21) Application number: 00928601.4
(22) Date of filing: 28.04.2000
(51) Int. Cl.: C10G 1/10, C10G 9/00

(54) **CONDENSATION AND RECOVERY OF OIL FROM PYROLYSIS GAS**
KONDENSATION UND RÜCKGEWINNUNG VON ÖL AUS PYROLYSEGAS
CONDENSATION ET RECUPERATION D'HUILE A PARTIR DE GAZ DE PYROLYSE

(30) Priority: 05.05.1999 US 132634 P
(43) Date of publication of application: 27.03.2002
(73) Proprietor: SVEDALA INDUSTRIES, INC., Waukesha, WI 53186 (US)
(72) Inventor: WEINECKE, Michael, H., Franklin, WI 53132 (US); UNTERWEGER, Robert, J., Nashota, WI 53058 (US)
(74) Representative: Popp, Eugen, Dr.
(86) International application number: US0011627
(87) International publication number: WO00068338

(56) References cited:
- EP-A- 0 823 469
- WO-A-98/02504
- DE-A- 1 944 383
- DE-A- 4 410 672
- DE-C- 4 324 112
- US-A- 4 647 443

## Description

### BACKGROUND OF THE INVENTION

The present invention relates generally to the recovery of usable products from the pyrolysis of material containing hydrocarbons. More specifically, the present invention relates to the recovery of oil from the gas formed when scrap tires are pyrolysed.

As the supply of available landfill space decreases, environmentally sensitive disposal of consumed vehicle tires presents an ever increasing problem. In the United States alone, over 280,000,000 vehicle tires are scrapped and shipped to landfills each year. Although some of the used vehicle tires are recycled to be used in pavement and others are burned as boiler fuel, more than 80% of used vehicle tires end up being deposited in landfills. Discarding vehicle tires in landfills has been recognized as a significant waste of a recyclable resource. For many years, it has been known that used vehicle tires can be recycled by pyrolysis to obtain valuable by-products that can be sold and reused. Pyrolysis, generally speaking, is a thermal distillation or decomposition of a substance, especially one containing hydrocarbons. In the case of used vehicle tires, this process is carried out in the absence of oxygen and at temperatures generally between 500°C and 800°C.

The process of decomposing used tires by pyrolysis allows the recovery of substantial amounts of oil, gas, carbon black and steel. Many different processes have been designed to recover these valuable products produced by pyrolysis, and the various techniques known for recovering these products each have their own unique and difficult problems. For example, the recovery of oil formed when scrap tires are pyrolysed has always been a challenge. Oil is typically produced by condensation of pyrolysis gas produced in the pyrolysis reactor, but these gases typically also include particulate matter, primarily carbon dust and glass fibers, which also are driven off from the scrap tires when pyrolysed. This particulate matter accumulates in fittings, vents and flame arresters, which eventually obstruct passages. In the past, particulate matter in the pyrolysis exhaust gas has been removed in a cyclone. However, if oil cools prematurely and begins to condense in the cyclone, the condensed oil will provide a surface for the particulate matter to adhere to. This not only may result in obstructions in the cyclone, but may also result in poor separation performance for the cyclone as it causes undesirable changes to inherent design parameters of the cyclone. In addition, if a packed bed condenser is employed in the system, particulate matter can foul the packing thus blocking off the open area and causing an intolerable rise in the pressure drop across the bed.

Another of the difficulties presented when recovering oil is caused by the fact that in addition to the oil vapors generated in the pyrolysis reactor, water vapor is also carried with the oil vapor. It is often the case with pyrolysis oil that it has a specific gravity close to that of water. As a result, if water and such oil are condensed together, they can form an emulsion that is difficult to separate.

US-A-4,647,443 discloses a pyrolysis method for recovering carbon black, oil and fuel gas from vehide tires.

### SUMMARY OF THE INVENTION

The present invention is a process for the recovery of oil from the pyrolysis of material containing hydrocarbons such as shredded vehicle tires. The process of the present invention not only recovers substantial amounts of pyrolysis oil, put also solves the problems noted above which occur in the prior art.

The distribution of the carbon black, oil and gases recovered from the pyrolysis of scrap tires is influenced by the temperature at which the pyrolysis occurs. It is well known that at higher pyrolysis temperatures gas generation is favored over oil generation. The present description assumes a breakdown of the tire into 32.4% carbon black, 12% steel and 55.6% oil and non-condensable gases. Of the oil and non-condensable gases, about 50% goes to liquid oil and the remaining 50% is non-condensable gases. Of the liquid oil, about 80% is collected in the first or primary condenser and about 20% in the second or secondary condenser.

Hot gases from a pyrolysis process, for example a rotary kiln processing used tires, are taken to a first oil condenser. The first oil condenser comprises a packed tower with countercurrent gas/liquid flow. Various types of packing material may be used, but the preferred packing is of the Pall ring type that has high surface area and high void fraction. Cooled oil is sprayed onto the top of the packed bed and is used to cool, condense and coalesce the vapor in the incoming gas stream. By controlling the temperature and flow rate of the cooled oil and the size of the packed tower, the temperature of the gas leaving the tower can be controlled. Preferably, the temperature of the gas leaving the tower should be above the dew point of the water vapor in the gas stream. A temperature of 100°C-105°C is used to insure that no water is condensed in the first oil condenser. By preventing the condensation of water in the first condenser, an undesirable oil/water emulsion which is difficult to separate is not obtained.

To prevent fouling of the packing in the first oil condenser, a spray of cool oil is also directed at the underside of the packing. In this manner, the particulate matter in the incoming gas stream will adhere to the lower surface of the packing which is coated with the upwardly directed oil spray. In addition, the spray on the underside of the packing keeps the particulate matter from remaining on the packing because it is washed off as the spray from the topside of the packing passes through the packing and is collected with the oil in the sump of the first condenser. The oil collected in the sump of the first condenser is drawn from the sump through a wire mesh duplex filter. The filter collects the larger particulate matter containing the oil and removes it from the process. This prevents the particulate matter from clogging the oil spray nozzles. After the filter, a pump moves the oil through a water-cooled liquid-to-liquid heat exchanger. The cooler oil returns to the first condenser where it is used to spray onto the topside and underside of the packed bed, as previously described. A portion of the oil, equal to that condensed in the tower, is removed and is the oil product from the process. The spray nozzles used in the condenser are single fluid atomization nozzles that contain relatively large nozzle openings, i.e. 3/16 in. or larger, to help prevent clogging of the nozzle.

From the first oil condenser, the gases go to a second oil condenser. This second condenser operates in a similar manner to the first condenser except that the gases are cooled below the dew point of water contained in the incoming gas stream. As a result, both water and oil are collected in the sump of this condenser. However, the oil collected in the sump of the second condenser typically has a specific gravity of 0.90 to 0.95. Since the oil is significantly less dense than the water collected with it, separation of the oil and water phases may be readily accomplished. The second condenser also only requires an oil spray on the topside of the packing and does not require an oil spray directed at the underside of the packing since a large majority of the particulate matter is removed in the first stage. Again, a portion of the oil, equal to that condensed in the tower, is removed as oil product from the process.

As a result, the process of the present invention enables the recovery of greater than 95% of the oil entrained in the initial hot gas exhaust stream from the pyrolysis reactor. This oil may comprise both a high boiling pyrolysis oil (flash point of 60°C or greater) as well as a low boiling pyrolysis oil (flash point of 34°C or below). In addition, a gas is produced from the second condenser which is readily usable as fuel gas having minimal amounts of condensable vapors therein.

The present invention of claims 1 to 15 relates to a system and method for recovering oil from the pyrolysis of material containing hydrocarbons.

The system of claims 1 to 8 comprises a system for recovering oil from the pyrolysis of material containing hydrocarbons, comprises: a source of pyrolysis gases containing water vapor, hydrocarbon fuel gases, condensable oil and particulate matter and a primary oil condenser for separating the source of pyrolysis gases into a primary oil fraction containing oil and particulate matter, and a primary vapor fraction containing oil, hydrocarbon fuel gases and water vapor. The primary oil condenser comprising a packed tower having an upper end, a lower end and a central portion filled with packing, the primary oil condenser including an inlet below the packing for receiving the pyrolysis gases, a first outlet below the packing for collecting the primary oil fraction, and a second outlet above the packing for collecting the primary vapor fraction.

The system also comprises: at least one upper spray nozzle disposed above the packing and directed to spray oil downwardly onto the packing, at least one lower spray nozzle disposed beneath the packing and directed to spray oil upwardly toward the packing, and a pump for pumping a portion of the primary oil fraction from the first outlet of the primary oil condenser to the upper and lower spray nozzles to prevent fouling of the packing; a filter disposed between the pump and the first outlet of the primary oil condenser to remove particulate matter from the primary oil fraction; and a secondary oil condenser for separating the primary vapor fraction into a secondary oil fraction containing oil and water, and a secondary vapor fraction containing hydrocarbon fuel gases, the secondary oil condenser including an inlet for receiving the primary vapor fraction, a first outlet for collecting the secondary oil fraction, and a second outlet for collecting the secondary vapor fraction.

The method of claims 9 to 15 comprises steps of: providing a source of pyrolysis gases containing water vapor, hydrocarbon fuel gases, condensable oil and particulate matter; separating the pyrolysis gases into a primary oil fraction containing oil having a flash point of about 60°C or above and particulate matter, and a primary vapor fraction containing oil having a flash point below about 60°C, water vapor and hydrocarbon fuel gases; separating the pyrolysis gases into primary oil and vapor fractions comprises feeding the pyrolysis gases into a packed tower having a central portion filled with packing and operating at a temperature above the dew point of the water vapor in the pyrolysis gases, and recycling a portion of the primary oil fraction to the packed tower to prevent fouling of the packing by spraying the primary oil fraction downwardly onto the packing and spraying the primary oil fraction upwardly toward the packing: removing particulate matter from the primary oil fraction prior to recycling the primary oil fraction to the packed tower; and separating the primary vapor fraction into a secondary oil fraction containing water and oil having a flash point of about 34°C or below, and a secondary vapor fraction containing hydrocarbon fuel gases.

### BRIEF DESCRIPTION OF THE SEVERAL VIEWS OF THE DRAWING

The drawings illustrate the best mode presently contemplated of carrying out the invention.

In the drawings:
Fig. 1 is a schematic illustration of a typical pyrolysis system for producing desirable materials such as oil, gas, char and steel wire from shredded vehicle tires; and
Fig. 2 is a schematic illustration of the oil recovery system of the present invention used to condense and collect oil from the pyrolysis exhaust gas produced in the system of Fig. 1.

### DETAILED DESCRIPTION OF THE INVENTION

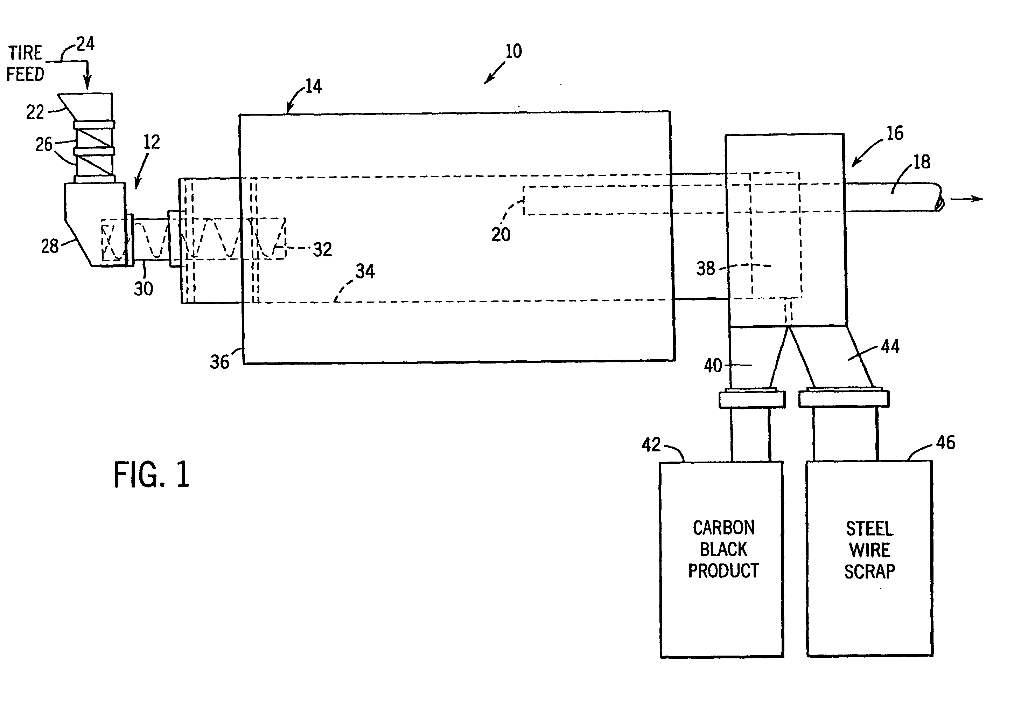

Fig. 1 generally illustrates a pyrolysis system 10 which provides a source of pyrolysis gas used in the present invention. The pyrolysis system 10 operates to receive a supply of shredded vehicle tires, and through pyrolysis, convert the shredded vehicle tires into desirable materials, such as oil, gas, steel wire, and char containing carbon black.

The pyrolysis system 10 generally includes an in-feed section 12, a pyrolysis section or reactor 14 and a separating section 16. The vehicle tire pieces are initially fed into the in-feed section 12 which in turn feeds the vehicle tire pieces into the pyrolysis section 14. As the vehicle tire pieces move through the pyrolysis section 14, hydrocarbons contained within the vehicle tire pieces are driven off as exhaust gases. Specifically, the gases are removed from pyrolysis section 14 via a gas discharge pipe 18 having an inlet port 20 positioned within pyrolysis section 14. The remaining portions of the vehicle tires after pyrolysis are desirable materials such as char and steel wire. Upon leaving the pyrolysis section 14, the char and steel wire are fed into the separating section 16 where they are separated into distinct end products. After separation, these desirable end products can then be processed downstream from the pyrolysis system 10 in accordance with known practices and eventually sold or reused.

Referring now to Fig. 1, the vehicle tire pieces are initially fed into a hopper 22 as illustrated by arrow 24. The vehicle tire pieces can be formed upstream from the hopper 22 by conventional shredding techniques (not shown) or can be shipped from a remote tire shredding facility. Typically, used vehicle tires are shredded into individual pieces each having a maximum size of approximately 4 inches. The vehicle tire pieces are fed by conventional conveyor techniques to the intake end of hopper 22. A pair of dump valves 26 are positioned within hopper 22 and function as an air interlock since the pyrolysis reaction that takes place within the pyrolysis section 14 must occur in the absence of air. After sequentially passing through dump valves 26, the scrap tire pieces fall into feed chamber 28. Thereafter, the tire pieces are fed via a rotatable cylinder 30 containing a screw-like internal flight 32 which acts as an Archimedes screw to transport the supply of vehicle tire pieces from chamber 28 into pyrolysis section 14.

Pyrolysis section 14 generally includes a rotary kiln 34 that extends through an insulted furnace 36. The rotary kiln 34 is rotatable about its longitudinal axis and is inclined such that the in-feed end is above the discharge end resulting in gravity flow of vehicle tire pieces between its in-feed end and its discharge end, as is conventional. The furnace 36 surrounds the rotary kiln 34 and includes a plurality of individual burner assemblies (not shown) that operate to heat the rotary kiln 34, as is conventional. Kiln 34 is generally heated to temperatures between 500°C and 800°C. The high operating temperature of kiln 34 causes the vehicle tire pieces to be rapidly heated, which promotes cracking and vaporizes the light hydrocarbon fractions contained within the vehicle tire pieces. The vaporized hydrocarbon fractions are released as discharge exhaust gases into the open interior of rotary kiln 34 and then outwardly through gas discharge pipe 18.

The discharge end of rotary kiln 34 extends from furnace 36 and enters into the separating section 16, as shown in Fig. 1. The discharge end of kiln 34 includes a trommel 38 which functions to separate the char material from the steel wire exiting pyrolysis section 14. Trommel 38 includes slots (not shown) sized to permit char to pass therethrough while being small enough to prevent a substantial amount of the steel wire from passing therethrough. The char separated from the product flow by trommel 38 passes through the slots in trommel 38 and into a char chute 40 and then into a collection bin 42. The separated char within bin 42 can then be processed downstream by conventional techniques to produce a commercial grade carbon black that can be utilized for various known functions.

The steel wire that remains in the product flow from trommel 38 then passes through wire chute 44 and into a wire collection bin 46. The steel wire collected in bin 46 is then processed downstream by conventional techniques to produce desirable products.

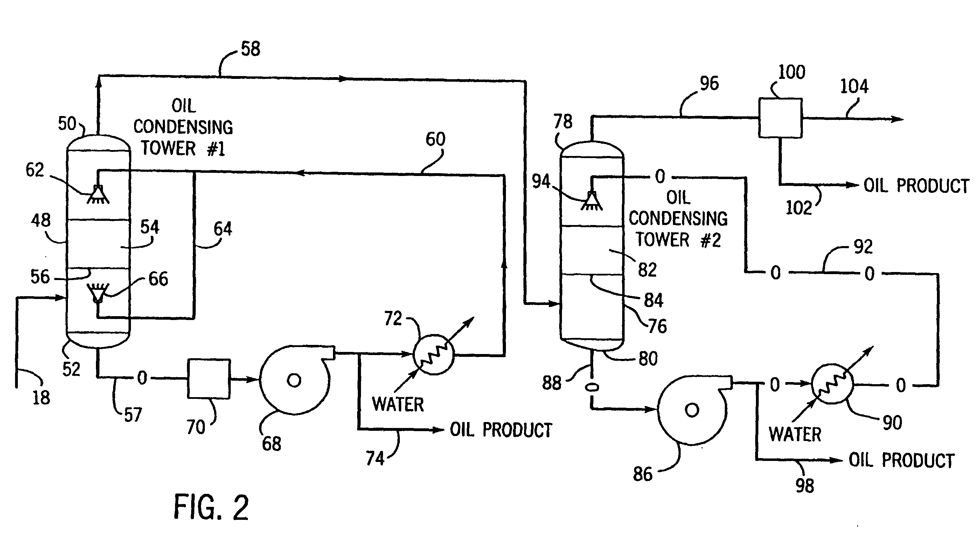

Referring now to Fig. 2, gas discharge pipe 18 extends from the interior of rotary kiln 34, and is typically connected to a source of negative pressure (not shown). The source of negative pressure acts to draw the expelled exhaust gases out from the interior of kiln 34. These expelled gases contain valuable hydrocarbon fuel gases, condensable oil, small quantities of steam (water vapor), and entrained solid particulate matter.

The gases removed by discharge pipe 18 are then subject to downstream processing via the recovery system illustrated in Fig. 2. As shown, gas discharge pipe 18 feeds the hot gases into a first or primary oil condenser 48. Oil condenser 48 is in the form of a cylindrical tower having an upper end 50, a lower end or sump 52, and a central portion filled with conventional packing 54. Packing 54 is in the form of discrete particles, and in particular are in the form of Pall rings having high surface area and high void fraction. The packing 54 is supported within condenser 48 via a screen 56, as is conventional. Discharge pipe 18 feeds the hot pyroylsis gases into the lower section of condenser 48 below screen 56 and above sump 52. These hot gases enter condenser 48 at a temperature of between about 400°C to 800°C, rise through packing 54, are cooled and then exit the upper end 50 of condenser 48 at a temperature of between about 100°C to 105°C via line 58.

Relatively cool oil is used to cool the hot gases passing through packing 54. This is accomplished by spraying cooled oil onto the top of packing 54 via line 60 and nozzle 62. Thus, a countercurrent gas/liquid flow is used to cool, condense and coalesce the vapor in the incoming gas stream passing upwardly through packing 54. Tower 48 separates the incoming pyrolysis gases into a primary oil fraction containing condensed oil and particulate matter, and a primary vapor fraction containing oil, hydrocarbon fuel gases and water vapor. By controlling the temperature and flow rate of the cooled oil and the size of the packed tower 48, the temperature of the gas leaving condenser 48 can be controlled. Preferably, it is desirable to control this temperature to be above the dew point of the water vapor in the gas stream. Thus, a temperature of about 100°C to 105°C is preferred to insure no water is condensed in condenser 48. By preventing the condensation of water in the first condenser 48, an undesirable oil/water mixture is not obtained in the material collected in sump 52. Since the condenser 48 is operating at a temperature above the dew point of water vapor in the gas stream in pipe 18, the oil being collected in sump 52 has a relatively high flash point and might be considered high boiling pyrolysis oil, i.e. having a flash point of about 60°C or higher and is typically between about 60°C and about 90°C, and preferably about 60°C.

To prevent fouling of packing 54, a spray of cool oil is also directed upwardly toward the underside of packing 54 via line 64 and nozzle 66. Since particulate matter in the hot gas will adhere to the first surface it contacts, the underside oil spray causes this matter to adhere to screen 56 and/or the lowest layer of packing 54. Then, the topside oil spray keeps this particulate matter from remaining on or permanently adhering to packing 54 and/or screen 56. Instead, the particulate matter is washed off as the oil sprayed onto the top of packing 54 flows through packing 54 and is collected in sump 52. Thus, the oil in sump 52 includes particulate matter as well as the high boiling pyrolysis oil having a flash point above 60°C.

The oil collected in sump 52 of condenser 48 is drawn from sump 52 via line 57 by pump 68 through a filter 70 which collects the larger particulate matter contained in the oil and removes it from the system in order to prevent the particulate matter from clogging the oil spray nozzles 62 and 66. Preferably, filter 70 is a wire mesh duplex filter. After filter 70, pump 68 moves the oil through a water cooled liquid-to-liquid heat exchanger 72. The cooled oil then recycles or returns to the condenser 48 via lines 60 and 64 where it is again sprayed onto the topside and underside of the packing 54. A portion of the oil, equal to that condensed in the condenser 48, is removed via line 74 and is a usable end product from the process. Oil line 58 which exits from the upper end 50 of condenser 48 contains oil having a flash point of about 60°C or greater, as noted above.

Gases exiting condenser 48 via line 58 are then fed to a second or secondary condenser 76. Condenser 76 is similar to condenser 48, and is a packed tower which is cylindrical in shape having an upper end 78 and a lower end or sump 80. Condenser 76 is also filled with ring packing 82 in its central section which is supported via a screen 84.

Condenser 76 operates in a similar manner to condenser 48 except that the gases entering its lower section at about 105°C below packing 82 are cooled below the dew point of water. Thus, both water and oil are collected in sump 80 of condenser 76 as a secondary oil fraction. However, the oil collected in sump 80 is of the low-boiling type, i.e. has a flash point of about 34°C or below and is typically between about 34°C to about 24°C and preferably about 30°C. Thus, this oil typically has a specific gravity of 0.90 to 0.95. Since this oil is significantly less dense than water, separation of the oil and water phases and the material collected in sump 80 may be readily accomplished.

As shown in Fig. 2, the oil water mixture collected in sump 80 is drawn from sump 80 via a pump 86 in line 88 through a water cooled liquid-to-liquid heat exchanger 90. The cooled oil returns or is recycled to condenser 76 via line 92 where it is sprayed onto the top of packing 82 via nozzle 94. This oil is used to cool the incoming gases from approximately 105°C to approximately 49°C so that gases exiting the upper end 78 of condenser 76 in line 96 contains less then 5% condensable gas vapors. In other words, 95% or greater of the oil contained in gas discharge pipe 18 has been removed and recovered via the system illustrated in Fig. 2. The gases exiting the upper end 78 of tower 76 are referred to herein as the secondary vapor fraction and contain mostly hydrocarbon fuel gases and some condensed oil mist entrained therein. A demister 100 located in line 96 will remove most of the condensed oil mist entrained in the gas stream passing therethrough via drain line 102. The gas in line 104 exiting demister 100 may then be transported for storage or burned as fuel.

Finally, a portion of the oil being circulated between sump 80 and packing 82, equal to that condensed in tower 76, is removed via line 98 and is recovered as an oil end product from the process. As noted above, the material in line 98 contains both water and oil which is then processed downstream by conventional techniques to separate the water and oil. This oil, however, is what is considered low boiling oil, i.e. that having a flash point of about 34°C or below.

Thus, a system has been illustrated and described which enables the recovery of usable products from the pyrolysis of used vehicle tires. In particular, a system has been described which avoids the drawbacks of previous systems. By controlling the temperature and size of condensers 48 and 76, and the flow rates of the cooling oil, the temperature of the gas leaving the condensers can be controlled, as can be the composition of the oil and gas end products obtained from this process.

### EXAMPLE 1

The following is sample data that may be used to size a 100 ton per day tire pyrolysis plant built in accordance with Figure 2.

| | |
|---|---|
| Tower 48 | Diameter = 30 inches Height = 26 feet |
| Feed inlet line 18 | Gas temp. = 850°F |
| Sump outlet line 57 | Oil temp. = 150°F |
| Heat exchanger 72 cooling water | Water temp. = 85°F Flow rate = 300 gpm |
| Oil recycle line 60 | Oil temp. = 90°F Flow rate = 175 gpm |
| Tower outlet line 58 | Gas temp. = 212°F |
| Tower 76 | Diameter = 24 inches Height = 10 feet |
| Sump outlet line 88 | Oil temp. = 100°F |
| Heat exchanger 90 cooling water | Water temp. = 85°F Flow rate = 70 gpm |
| Oil recycle line 92 | Oil temp. = 90°F Flow rate = 85 gpm |
| Tower outlet line 96 | Gas temp. = 100°F |

### EXAMPLE 2

The following is a chart showing the composition of oil collected in a pilot plant study from a system constructed as illustrated in Figure 2 for two different sources of tires, i.e. Source 1 was from used automobile tires, and Source 2 was from reject or off-spec OEM automobile tires.

| Source 1 (Used Auto Tires) | | | | | | | | | | |
|---|---|---|---|---|---|---|---|---|---|---|
| | Distribution (Wt.%) | Viscosity (Centistokes) | Pour Point (°F) | Conradson Carbon (Wt.%) | Pentane Insolubles (Wt.%) | Specific Gravity | Carbon (Wt.%) | Hydrogen (Wt%) | Sulfur (Wt.%) | Ash (Wt.%) |
| Primary | 83.5% | 6.27 | -22 | 7.9 | 0.97 | 0.99 | 87.85 | 8.67 | 1.18 | 0.04 |
| Secondary | 2.6% | | | | | 0.95 | | | | |
| Demister | 13.8% | 0.893 | -22 | 1.2 | 0.07 | 0.87 | 86.31 | 9.48 | 0.85 | 0.01 |
| | | | | | | | | | | |

| Source 2 (Off-spec OEM Auto Tires) | | | | | | | | | | |
|---|---|---|---|---|---|---|---|---|---|---|
| Primary | 85.2% | 13.10 | -22 | 11.2 | 5.1 | 1.03 | 87.81 | 8.18 | 1.32 | 0.09 |
| Secondary | 4.0% | | | | | 0.97 | | | | |
| Demister | 10.8% | 0.952 | -22 | 1.9 | 0.7 | 0.89 | 87.37 | 9.32 | 0.49 | 0.01 |

### EXAMPLE 3

The following is a chart showing a typical non-condensable gas analysis for the product obtained from line 104 in a tire pyrolysis pilot plant constructed as illustrated in Figure 2.

| Gas Analysis | |
|---|---|
| Component | Wt% |
| • H₂ | 0.7 |
| • CH₄ | 13.2 |
| • C₂'s | 16.5 |
| • C₃'s | 15.1 |
| • C₄'s | 26.7 |
| • C₅'s | 9.5 |
| • C₆+'s | 14.1 |
| • H₂S | 1.1 |
| • Carbonyl Sulfide | 0.1 |
| • CO | 2.9 |
| • Total | 100.0 |
| Heating Value (BTU/lb) | 19,600 |
| (BTU/scf) | 1,700 |

## Claims

1. A system for recovering oil from the pyrolysis of material containing hydrocarbons, comprising:
a source of pyrolysis gases containing water vapor, hydrocarbon fuel gases, condensable oil and particulate matter;
a primary oil condenser for separating said source of pyrolysis gases into a primary oil fraction containing oil and particulate matter, and a primary vapor fraction containing oil, hydrocarbon fuel gases and water vapor, said primary oil condenser comprising a packed tower having an upper end, a lower end and a central portion filled with packing, said primary oil condenser including an inlet below said packing for receiving said pyrolysis gases, a first outlet below said packing for collecting the primary oil fraction, and a second outlet above said packing for collecting the primary vapor fraction; at least one upper spray nozzle disposed above said packing and directed to spray oil downwardly onto said packing,
at least one lower spray nozzle disposed beneath said packing and directed to spray oil upwardly toward said packing, and a pump for pumping a portion of said primary oil fraction from said first outlet of said primary oil condenser to said upper and lower spray nozzles to prevent fouling of said packing;
a filter disposed between said pump and the first outlet of said primary oil condenser to remove particulate matter from said primary oil fraction; and
a secondary oil condenser for separating said primary vapor fraction into a secondary oil fraction containing oil and water, and a secondary vapor fraction containing hydrocarbon fuel gases, said secondary oil condenser including an inlet for receiving said primary vapor fraction, a first outlet for collecting the secondary oil fraction, and a second outlet for collecting the secondary vapor fraction.

2. The system of claim 1 further including a tertiary oil separator for removing condensed oil mist entrained in said secondary vapor fraction to provide a tertiary oil fraction and a tertiary vapor fraction.

3. The system of claim 2 wherein said tertiary oil separator is a demister.

4. The system of claim 1 further including a heat exchanger disposed between said pump and said nozzles to cool said primary oil fraction prior to being sprayed onto said packing.

5. The system of claim 1 wherein said secondary oil condenser is a packed tower having an upper end, a lower end and a central portion filled with packing.

6. The system of claim 5 further including means for recycling a portion of said secondary oil fraction to said packed tower to condense the oil and water in said primary vapor fraction.

7. The system of claim 5 further including at least one upper spray nozzle disposed above said packing and directed to spray oil downwardly onto said packing, and a pump for pumping a portion of said secondary oil fraction from said first outlet of said secondary oil condenser to said upper spray nozzle.

8. The system of claim 7 further including a heat exchanger disposed between said pump and said upper nozzle to cool said secondary oil fraction prior to being sprayed onto said packing.

9. A method for recovering oil from the pyroylsis of material containing hydrocarbons, comprising the steps of:
providing a source of pyrolysis gases containing water vapor, hydrocarbon fuel gases, condensable oil and particulate matter;
separating the pyrolysis gases into a primary oil fraction containing oil having a flash point of about 60°C or above and particulate matter, and a primary vapor fraction containing oil having a flash point below about 60°C, water vapor and hydrocarbon fuel gases; said step of separating the pyroylsis gases into primary oil and vapor fractions comprises feeding the pyrolysis gases into a packed tower having a central portion filled with packing and operating at a temperature above the dew point of the water vapor in said pyrolysis gases, and recycling a portion of said primary oil fraction to said packed tower to prevent fouling of said packing by spraying said primary oil fraction downwardly onto said packing and spraying said primary oil fraction upwardly toward said packing;
removing particulate matter from said primary oil fraction prior to recycling said primary oil fraction to said packed tower; and
separating the primary vapor fraction into a secondary oil fraction containing water and oil having a flash point of about 34°C or below, and a secondary vapor fraction containing hydrocarbon fuel gases.

10. The method of claim 9 further including the step of removing condensed oil mist entrained in said secondary vapor fraction to provide a tertiary oil fraction and a tertiary vapor fraction.

11. The method of claim 9 further including the step of cooling said primary oil fraction prior to recycling said primary oil fraction to said packed tower.

12. The method of claim 9 wherein the step of separating the primary vapor fraction into secondary oil and vapor fractions comprises feeding the primary vapor fraction into a packed tower having a central portion filled with packing and operating at a temperature below the dew point of the water vapor in said primary vapor fraction.

13. The method of claim 12 further including the step of recycling a portion of said secondary oil fraction to said packed tower to condense the water and oil in said primary vapor fraction.

14. The method of claim 13 wherein the step of recycling includes spraying said secondary oil fraction downwardly onto said packing.

15. The method of claim 13 further including the step of cooling said secondary oil fraction prior to recycling said secondary oil fraction to said packed tower.

## Patentansprüche

1. System zur Rückgewinnung von Öl aus der Pyrolyse kohlenwasserstoffhaltigen Materials, Folgendes umfassend:
eine Quelle von Pyrolysegasen, die Wasserdampf, Kohlenwasserstoffbrennstoffgase, kondensierbares Öl und Schwebstoffteilchen umfasst;
einen primären Ölkondensatabscheider, um die Quelle von Pyrolysegasen in eine primäre Ölfraktion, die Öl und Schwebstoffteilchen enthält, und eine primäre Dampffraktion abzutrennen, die Öl, Kohlenwasserstoffbrennstoffgase und Wasserdampf enthält, wobei der primäre Ölkondensatabscheider einen Füllkörperturm mit einem oberen Ende, einem unteren Ende und einem Zentralabschnitt umfasst, der mit Füllmaterial befüllt ist, wobei der primäre Ölkondensatabscheider unterhalb des Füllmaterials einen Einlass zur Aufnahme der Pyrolysegase, unterhalb des Füllmaterials einen ersten Auslass zum Auffangen der primären Ölfraktion, und oberhalb des Füllmaterials einen zweiten Auslass zum Auffangen der primären Dampffraktion aufweist;
mindestens eine obere Sprühdüse, die oberhalb des Füllmaterials angeordnet und so gerichtet ist, dass sie Öl nach unten auf das Füllmaterial sprüht,
mindestens eine untere Sprühdüse, die unterhalb des Füllmaterials angeordnet und so gerichtet ist, dass sie Öl nach oben zum Füllmaterial hin sprüht, und eine Pumpe, um einen Teil der primären Ölfraktion aus dem ersten Auslass des primären Ölkondensatabscheiders zu den oberen und unteren Sprühdüsen zu pumpen, um ein Verklumpen des Füllmaterials zu verhindern;
einen Filter, der zwischen der Pumpe und dem ersten Auslass des primären Ölkondensatabscheiders angeordnet ist, um Schwebstoffteilchen aus der primären Ölfraktion zu entfernen; und
einen sekundären Ölkondensatabscheider zum Abtrennen der primären Dampffraktion in eine sekundäre Ölfraktion, die Öl und Wasser enthält, und eine sekundäre Dampffraktion, die Kohlenwasserstoffbrennstoffgase enthält, wobei der sekundäre Ölkondensatabscheider einen Einlass zur Aufnahme der primären Dampffraktion, einen ersten Auslass zum Auffangen der sekundären Ölfraktion, und einen zweiten Auslass zum Auffangen der sekundären Dampffraktion aufweist.

2. System nach Anspruch 1, darüber hinaus einen tertiären Ölabscheider umfassend, um kondensierten Ölnebel zu entfernen, der in der sekundären Dampffraktion mittransportiert wird, um eine tertiäre Ölfraktion und eine tertiäre Dampffraktion bereitzustellen.

3. System nach Anspruch 2, bei dem der tertiäre Ölabscheider ein Entnebler ist.

4. System nach Anspruch 1, darüber hinaus einen Wärmeaustauscher umfassend, der zwischen der Pumpe und den Düsen angeordnet ist, um die primäre Ölfraktion zu kühlen, bevor sie auf das Füllmaterial gesprüht wird.

5. System nach Anspruch 1, bei dem der sekundäre Ölkondensatabscheider ein Füllkörperturm mit einem oberen Ende, einem unteren Ende und einem Zentralabschnitt ist, der mit Füllmaterial befüllt ist.

6. System nach Anspruch 5, darüber hinaus Einrichtungen zur Rückleitung eines Teils der sekundären Ölfraktion zum Füllkörperturm umfassend, um das Öl und das Wasser in der primären Dampffraktion zu kondensieren.

7. System nach Anspruch 5, darüber hinaus mindestens eine obere Sprühdüse, die oberhalb des Füllmaterials angeordnet und so gerichtet ist, dass sie Öl nach unten auf das Füllmaterial sprüht, und eine Pumpe umfassend, um einen Teil der sekundären Ölfraktion aus dem ersten Auslass des sekundären Ölkondensatabscheiders zur oberen Sprühdüse zu pumpen.

8. System nach Anspruch 7, darüber hinaus einen Wärmeaustauscher umfassend, der zwischen der Pumpe und der oberen Düse angeordnet ist, um die sekundäre Ölfraktion zu kühlen, bevor sie auf das Füllmaterial gesprüht wird.

9. Verfahren zur Rückgewinnung von Öl aus der Pyrolyse kohlenwasserstoffhaltigen Materials, folgende Schritte umfassend:
Bereitstellen einer Quelle von Pyrolysegasen, die Wasserdampf, Kohlenwasserstoffbrennstoffgase, kondensierbares Öl und Schwebstoffteilchen umfasst;
Abtrennen der Pyrolysegase in eine primäre Ölfraktion, die Öl mit einem Flammpunkt von ca. 60°C oder darüber und Schwebstoffteilchen enthält, und in eine primäre Dampffraktion, die Öl mit einem Flammpunkt von unter 60°C, Wasserdampf und Kohlenwasserstoffbrennstoffgase enthält; wobei der Schritt des Abtrennens der Pyrolysegase in eine primäre Ölfraktion und eine primäre Dampffraktion umfasst, die Pyrolysegase in einen Füllkörperturm einzuleiten, der einen Zentralabschnitt aufweist, der mit Füllmaterial befüllt ist und bei einer Temperatur über dem Taupunkt des Wasserdampfs in den Pyrolysegasen arbeitet und einen Teil der primären Ölfraktion zum Füllkörperturm rückleitet, um ein Verklumpen des Füllmaterials zu verhindern, indem die primäre Ölfraktion nach unten auf das Füllmaterial gesprüht wird, und die primäre Ölfraktion nach oben zum Füllmaterial hin gesprüht wird;
Entfernen von Schwebstoffteilchen aus der primären Ölfraktion, bevor die primäre Ölfraktion zum Füllkörperturm rückgeleitet wird; und
Abtrennen der primären Dampffraktion in eine sekundäre Ölfraktion, die Wasser und Öl mit einem Flammpunkt von ca. 34°C oder darunter, und eine sekundäre Dampffraktion, die Kohlenwasserstoffbrennstoffgase enthält.

10. Verfahren nach Anspruch 9, darüber hinaus den Schritt des Entfernens kondensierten Ölnebels umfassend, der in der sekundären Dampffraktion mittransportiert wird, um eine tertiäre Ölfraktion und eine tertiäre Dampffraktion bereitzustellen.

11. Verfahren nach Anspruch 9, darüber hinaus den Schritt des Kühlens der primären Ölfraktion vor der Rückleitung der primären Ölfraktion zum Füllkörperturm umfassend.

12. Verfahren nach Anspruch 9, bei dem der Schritt des Abtrennens der primären Dampffraktion in eine sekundäre Ölfraktion und eine sekundäre Dampffraktion das Einleiten der primären Dampffraktion in einen Füllkörperturm mit einem Zentralabschnitt umfasst, der mit Füllmaterial befüllt ist und bei einer Temperatur unter dem Taupunkt des Wasserdampfs in der primären Dampffraktion arbeitet.

13. Verfahren nach Anspruch 12, darüber hinaus den Schritt des Rückleitens eines Teils der sekundären Ölfraktion zum Füllkörperturm umfassend, um das Wasser und das Öl in der primären Dampffraktion zu kondensieren.

14. Verfahren nach Anspruch 13, bei dem der Schritt des Rückleitens umfasst, die sekundäre Ölfraktion nach unten auf das Füllmaterial zu sprühen.

15. Verfahren nach Anspruch 13, darüber hinaus den Schritt des Kühlens der sekundären Ölfraktion umfassend, bevor die sekundäre Ölfraktion zum Füllkörperturm rückgeleitet wird.

## Revendications

1. Système de récupération de l'huile de la pyrolyse d'un matériau contenant des hydrocarbures, comprenant :
une source de gaz de pyrolyse contenant de la vapeur d'eau, des gaz de carburant hydrocarbure, de l'huile condensable et de la matière en particules ;
un condenseur primaire d'huile pour séparer ladite source de gaz de pyrolyse en une fraction primaire d'huile contenant de l'huile et de la matière en particules et une fraction primaire de vapeur contenant de l'huile, des gaz de carburant hydrocarbure et de la vapeur d'eau, ledit condenseur primaire d'huile comprenant une tour à garnissage ayant une extrémité supérieure, une extrémité inférieure et une portion centrale emplie de garniture, ledit condensateur primaire d'huile comprenant une admission en dessous de ladite garniture pour recevoir lesdits gaz de pyrolyse, une première évacuation en dessous de ladite garniture pour collecter la fraction primaire d'huile et une deuxième évacuation au-dessus de ladite garniture pour collecter la fraction primaire de vapeur ; au moins un gicleur supérieur disposé au-dessus de ladite garniture et orienté de façon à pulvériser de l'huile vers le bas, sur ladite garniture,
au moins un gicleur inférieur disposé au-dessous de ladite garniture et orienté de façon à pulvériser de l'huile vers le haut, vers ladite garniture, et une pompe pour pomper une portion de ladite fraction primaire d'huile de ladite première évacuation dudit condenseur primaire d'huile vers lesdits gicleurs supérieur et inférieur pour empêcher l'encrassement de ladite garniture ;
un filtre disposé entre ladite pompe et la première évacuation dudit condenseur primaire d'huile pour extraire la matière en particules de ladite fraction primaire d'huile ; et
un condenseur secondaire d'huile pour séparer ladite fraction primaire de vapeur en une fraction secondaire d'huile contenant de l'huile et de l'eau et une fraction secondaire de vapeur contenant des gaz de carburant hydrocarbure, ledit condenseur secondaire d'huile comprenant une admission pour recevoir ladite fraction primaire de vapeur, une première évacuation pour collecter la fraction secondaire d'huile et une deuxième évacuation pour collecter la fraction secondaire de vapeur.

2. Le système de la revendication 1 comprenant en outre un séparateur tertiaire d'huile pour extraire le brouillard d'huile condensé entraîné dans ladite fraction secondaire de vapeur pour fournir une fraction tertiaire d'huile et une fraction tertiaire de vapeur.

3. Le système de la revendication 2 dans lequel ledit séparateur tertiaire d'huile est un dispositif antibuée.

4. Le système de la revendication 1 comprenant en outre un échangeur de chaleur disposé entre ladite pompe et ledit gicleur pour refroidir ladite fraction primaire d'huile avant qu'elle ne soit pulvérisée sur ladite garniture.

5. Le système de la revendication 1 dans lequel ledit condenseur secondaire d'huile est une tour à garnissage ayant une extrémité supérieure, une extrémité inférieure et une portion centrale emplie de garniture.

6. Le système de la revendication 5 comprenant en outre un moyen pour recycler une portion de ladite fraction secondaire d'huile vers ladite tour à garnissage pour condenser l'huile et l'eau de ladite fraction primaire de vapeur.

7. Le système de la revendication 5 comprenant en outre au moins un gicleur supérieur disposé au-dessus de ladite garniture et orienté de façon à pulvériser de l'huile vers le bas, sur ladite garniture et une pompe pour pomper une portion de ladite fraction secondaire d'huile de ladite première évacuation dudit condenseur secondaire d'huile vers ledit gicleur supérieur.

8. Le système de la revendication 7 comprenant en outre un échangeur de chaleur disposé entre ladite pompe et ledit gicleur supérieur pour refroidir ladite fraction secondaire d'huile avant qu'elle ne soit pulvérisée sur ladite garniture.

9. Méthode pour récupérer de l'huile de la pyrolyse d'un matériau contenant des hydrocarbures, comprenant les étapes suivantes :
fourniture d'une source de gaz de pyrolyse contenant de la vapeur d'eau, des gaz de carburant hydrocarbure, de l'huile condensable et de la matière en particules ;
séparation des gaz de pyrolyse en une fraction primaire d'huile contenant de l'huile ayant une température d'inflammation de 60 °C environ ou plus et de la matière en particules, et une fraction primaire de vapeur contenant de l'huile ayant une température d'inflammation inférieure à 60 °C, de la vapeur d'eau et des gaz de carburant hydrocarbure ; ladite étape de séparation des gaz de pyrolyse en fractions primaires d'huile et de vapeur comprenant l'acheminement des gaz de pyrolyse dans une tour à garnissage ayant une portion centrale emplie de garniture et fonctionnant à une température supérieure à la température de condensation de la vapeur d'eau dans lesdits gaz de pyrolyse et le recyclage d'une portion de ladite fraction primaire d'huile vers ladite tour à garnissage pour empêcher l'encrassement de ladite garniture en pulvérisant ladite fraction primaire d'huile vers le bas sur ladite garniture et en pulvérisant ladite fraction primaire d'huile vers le haut vers ladite garniture ;
enlèvement de la matière en particules de ladite fraction primaire d'huile avant le recyclage de ladite fraction primaire d'huile vers ladite tour à garnissage ; et
séparation de ladite fraction primaire de vapeur en une fraction secondaire d'huile contenant de l'eau et de l'huile ayant une température d'inflammation de 34 °C environ ou moins et une fraction secondaire de vapeur contenant des gaz de carburant hydrocarbure.

10. La méthode de la revendication 9 comprenant en outre l'étape de l'enlèvement du brouillard d'huile condensée entraîné dans ladite fraction secondaire de vapeur pour fournir une fraction tertiaire d'huile et une fraction tertiaire de vapeur.

11. La méthode de la revendication 9 comprenant en outre l'étape du refroidissement de ladite fraction primaire d'huile avant le recyclage de ladite fraction primaire d'huile vers ladite tour à garnissage.

12. La méthode de la revendication 9 dans laquelle l'étape de séparation de la fraction primaire de vapeur en des fractions secondaires d'huile et de vapeur comprend l'acheminement de la fraction primaire de vapeur dans une tour à garnissage ayant une portion centrale emplie de garniture et fonctionnant à une température inférieure à la température de condensation de la vapeur d'eau dans ladite fraction primaire de vapeur.

13. La méthode de la revendication 12 comprenant en outre l'étape du recyclage d'une portion de ladite fraction secondaire d'huile vers ladite tour à garnissage pour condenser l'eau et l'huile dans ladite fraction primaire de vapeur.

14. La méthode de la revendication 13 dans laquelle l'étape de recyclage comprend la pulvérisation de ladite fraction secondaire d'huile vers le bas sur ladite garniture.

15. La méthode de la revendication 13 comprenant en outre l'étape du refroidissement de ladite fraction secondaire d'huile avant le recyclage de ladite fraction secondaire d'huile vers ladite tour à garnissage.
